# EUROPEAN PATENT SPECIFICATION

(11) **EP 4 005 824 B1**
(45) Date of publication and mention of the grant of the patent: **12.07.2023**
(21) Application number: 21203482.1
(22) Date of filing: 19.10.2021
(51) Int. Cl.: B60C 9/18, B60C 9/20, B60C 9/22

(54) **MOTORCYCLE TIRE**
MOTORRADREIFEN
PNEUMATIQUE DE MOTOCYCLETTE

(30) Priority: 25.11.2020 JP 2020195351
(43) Date of publication of application: 01.06.2022
(73) Proprietor: Sumitomo Rubber Industries, Ltd., Kobe-shi, Hyogo-ken 651-0072 (JP)
(72) Inventor: TOCHIKI, Yuki, Kobe-shi, Hyogo, 651-0072 (JP)
(74) Representative: Manitz Finsterwald Patent- und Rechtsanwaltspartnerschaft mbB

(56) References cited:
- EP-B1- 1 242 252
- FR-A3- 3 084 014
- US-A- 5 441 093
- US-A1- 2007 113 946

## Description

### Technical field

The present invention relates to a motorcycle tire capable of exhibiting excellent turning performance.

### Background art

Conventionally, there have been known motorcycle tires provided with a tread reinforcing layer disposed in the tread portion in order to improve turning/cornering performance. Patent Document 1 below discloses a motorcycle tire provided with a tread reinforcing layer composed of two belt plies disposed radially outside the carcass, and one band ply disposed radially outside two belt plies.
Patent Document 1: Japanese Patent Application Publication No. 2018-111375

A motorcycle tire in accordance with the preamble of claim 1 is known from US 5 441 093 A. Related tires are known from US 2007/113946 A1, FR 3 084 014 A3 and EP 1 242 252 B1.

### Summary of the invention

### Problems to be solved by the invention

The motorcycle tire of Patent Document 1 generates a large cornering force due to the hoop effect of the two belt plies, and there is a tendency that a force to raise the leant motorcycle becomes large when the centrifugal force is small, for example, from a straight running state to a turning state with small lean angles. Therefore, the motorcycle tire of Patent Document 1 has been desired to have further improvement in turning performance when the centrifugal force is small.

### Means for solving the problems

The present invention was made in view of the above circumstances, and a primary object of the present invention is to provide a motorcycle tire capable of exhibiting excellent turning performance even when the centrifugal force is small, for example, from a straight running state to a turning state with small lean angles.

According to the present invention, a motorcycle tire comprises a tread portion, a pair of sidewall portions, a pair of bead portions, a carcass extending between the bead portions through the tread portion and the sidewall portions, and a tread reinforcing layer disposed radially outside the carcass in the tread portion, wherein
the tread reinforcing layer includes a belt layer composed of a plurality of belt cords, and a band layer composed of a plurality of band cords,
the belt layer is composed of a radially inner belt ply disposed adjacently to the carcass, and a radially outer belt ply disposed radially outside the radially inner belt ply,
the belt cords of the radially inner belt ply are arranged so as to intersect with the tire circumferential direction at a first angle,
the belt cords of the radially outer belt ply are arranged so as to intersect with the tire circumferential direction at a second angle different from the first angle,
the band layer is composed of at least one band ply of which band cords are arranged at an angle of 5 degrees or less with respect to the tire circumferential direction,
the band layer is disposed between the radially inner belt ply and the radially outer belt ply so that the band layer is adjacent to both of the radially inner belt ply and the radially outer belt ply.

According to an embodiment of the present invention, said at least one band ply has a developed width smaller than a developed width of the radially inner belt ply and a developed width of the radially outer belt ply.

According to an embodiment of the present invention, the developed width of said at least one band ply is in a range from 30% to 90% of a developed tread width.

According to an embodiment of the present invention, the first angle is in a range from 50 to 80 degrees.

According to an embodiment of the present invention, the second angle is in a range from 70 to 90 degrees.

According to an embodiment of the present invention, the difference between the second angle and the first angle is in a range from 10 to 40 degrees.

According to an embodiment of the present invention, the second angle is larger than the first angle.

According to an embodiment of the present invention, the tread portion comprises a rubber layer disposed axially outside said at least one band ply, and the rubber layer is composed of at least one rubber sheet.

According to an embodiment of the present invention, the rubber layer is disposed between the radially inner belt ply and the radially outer belt ply, and a distance between the radially inner belt ply and the radially outer belt ply measured at the position where the rubber layer is disposed, is in a range from 0.5 to 3.0 mm and substantially constant.

According to an embodiment of the present invention, the tread portion comprises a rubber layer disposed axially outside said at least one band ply, the rubber layer is disposed between the radially inner belt ply and the radially outer belt ply, and a distance between the radially inner belt ply and the radially outer belt ply measured at the position where the rubber layer is disposed, is in a range from 0.5 to 3.0 mm and substantially constant.

According to an embodiment of the present invention, the rubber layer has a complex elastic modulus of 500 kPa or more at 70 degrees C.

### Effects of the Invention

In the motorcycle tire according to the present invention, the band layer is disposed between the radially inner belt ply and the radially outer belt ply and adjacently to both of the radially inner belt ply and the radially outer belt ply.

Such motorcycle tires can moderate the hoop effect of the radially inner and outer belt plies, and suppress the generation of excessive cornering force when the centrifugal force is small, for example, from a straight running state to a turning state with small lean angles. Therefore, the motorcycle tire according to the present invention can exhibit excellent turning performance even when the centrifugal force is small, for example, from a straight running state to a turning state with small lean angles.

### Brief description of the drawings

Fig. 1 is a cross-sectional view of a motorcycle tire as an embodiment of the present invention.
Fig. 2 is a developed partial view of the tread reinforcing layer.
Fig. 3 is an enlarged cross-sectional view of the motorcycle tire.

### Description of the Preferred Embodiments

Hereinafter, an embodiment of the present invention will be described in detail in conjunction with accompanying drawings.

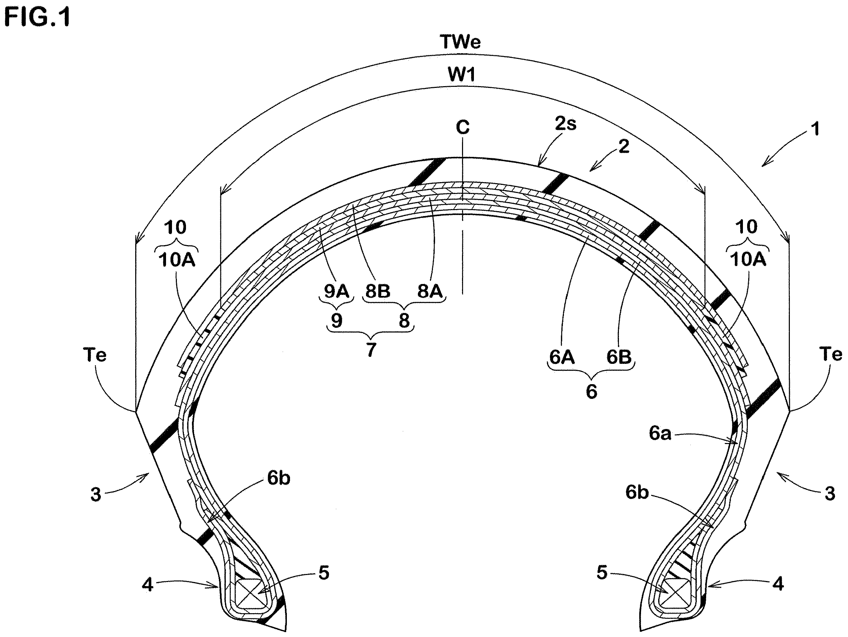

Fig. 1 is a meridian cross-sectional view of a motorcycle tire 1 under its normal state.

Here, the "normal state" is a state in which the tire 1 is mounted on a normal rim, and inflated to a normal internal pressure, and loaded with no tire load.

In the present specification, dimensions of each portion of the tire 1 are values measured in the normal state unless otherwise noted.

The "normal rim" is a rim specified for the tire in the standard system including the standard on which the tire 1 is based, for example, the "standard rim" in JATMA, "Design Rim" in TRA, and "Measuring Rim" in ETRTO.

The "normal internal pressure" is the air pressure specified for the tire in the standard system including the standard on which the tire 1 is based, for example, the "maximum air pressure" in JATMA, maximum value described in the table "TIRE LOAD LIMITS AT VARIOUS COLD INFLATION PRESSURES" in TRA, and "INFLATION PRESSURE" in ETRTO.

As shown in Fig. 1, the tire 1 in the present embodiment comprises a tread portion 2, a pair of sidewall portions 3 extending radially inwardly from respective tread edges of the tread portion 2, and a pair of bead portions 4 located at radially inner ends of the respective sidewall portions 3.

In each of the pair of bead portions 4, a bead core 5 is embedded in this embodiment.

The tread surface 2s, which is the radially outer surface of the tread portion 2, extends from one to the other of the tread edges Te through the tire equator C, while curving convexly toward the radial outside, for example, in an arc shape.

The tire 1 is therefore, possible to make turn with a large camber angle. In the present embodiment, the maximum tire cross-section width occurs between the tread edges Te.

Here, the tread edges Te are the ends in the tire axial direction of the tread portion 2. The tire equator C is the center in the tire axial direction between the tread edges Te. The length measured along the tread surface 2s between the tread edges Tes is the developed tread width TWe.

The tire 1 in the present embodiment comprises a carcass 6 extending between the bead portions 4 through the tread portion 2 and the sidewall portions 3.

The carcass 6 is turned up in each bead portion 4 around a bead core 5 disposed therein so that the carcass 6 comprises a pair of turned-up portions 6b and a main portion 6a therebetween.

The carcass 6 comprises at least one carcass ply, in this embodiment two carcass plies 6A and 6B. Each of the carcass plies 6A and 6B comprises, for example, carcass cords arranged at an angle in a range from 75 to 90 degrees with respect to the tire circumferential direction.

The tire 1 in the present embodiment is provided with a tread reinforcing layer 7 disposed radially outside the carcass 6 in the tread portion 2. The tread reinforcing layer 7 in the present embodiment includes a belt layer 8 and a band layer 9.

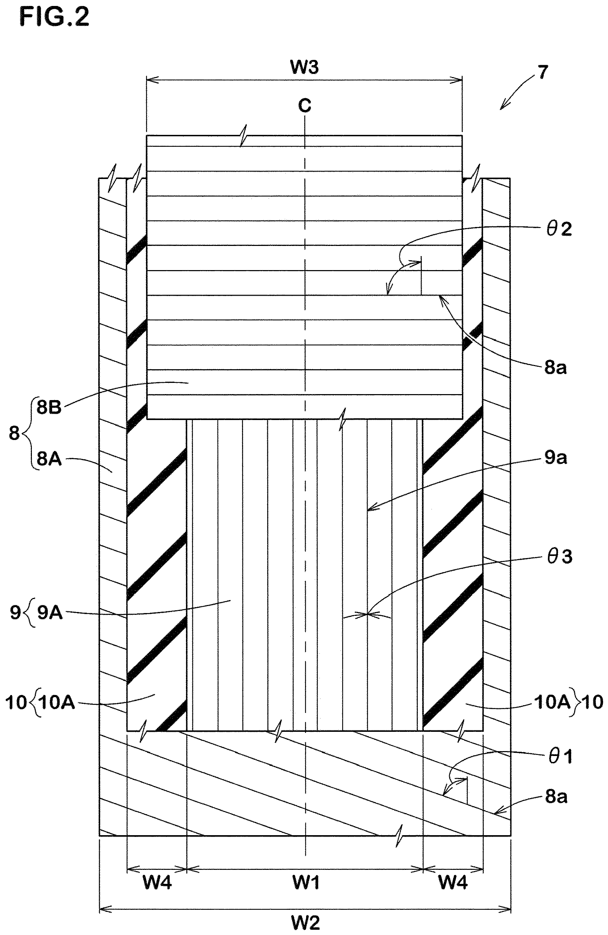

Fig. 2 is a developed view of the tread reinforcing layer 7 in the present embodiment.

It is desirable that the belt layer 8 is an array of a plurality of belt cords 8a as shown in Figs. 1 and 2, and it is desirable that the band layer 9 is an array of a plurality of band codes 9a.

The belt layer 8 in the present embodiment comprises one radially inner belt ply 8A disposed adjacently to the carcass 6, and one radially outer belt ply 8B disposed radially outside the radially inner belt ply 8A.

The radially inner belt ply 8A in the present embodiment is formed from the belt cords 8a arranged at a first angle θ1 with respect to the tire circumferential direction.

The radially outer belt ply 8B in the present embodiment is formed from the belt cords 8b arranged at a second angle θ2 different from the first angle θ1.

Such belt layer 8 is useful for improving the rigidity of the tread portion 2 and generating a large cornering force by the hoop effect of the radially inner belt ply 8A and the radially outer belt ply 8B.

The turning of the motorcycle is performed by leaning the motorcycle. At this time, the lateral force on the tire 1 is expressed as the sum of the camber thrust generated by the leaning of the tire 1 and the cornering force generated by the slip angle of the tire 1. When the lateral force on the tire 1 and the centrifugal force of the motorcycle are balanced, the motorcycle can turn stably and thus can be said to be excellent in the turning performance or cornering performance.

The centrifugal force of a motorcycle is relatively small from straight running to turning with small lean angles, and becomes larger during cornering with large lean angles. Therefore, by suppressing the generation of the cornering force from the straight running to the turning with small lean angles, and increasing the cornering force during cornering with large lean angles, it is possible to improve the turning/cornering performance of the tire 1.

In the tire 1 of the present embodiment, the cornering force is increased by the belt layer 8, therefore, the lateral force acting on the tire 1 is also increased. Thus, it is possible to improve the cornering performance when the centrifugal force is large such as during cornering with large lean angles.

The band layer 9 is composed of at least one, in the present embodiment only one band ply 9A of made of band cords 9a arranged at an angle of 5 degrees or less with respect to the tire circumferential direction.

In the present embodiment, the band ply 9A is disposed between the radially inner belt ply 8A and the radially outer belt ply 8B, and adjacently to the radially inner belt ply 8A and the radially outer belt ply 8B.

In the tire 1 having such band ply arrangement, the hoop effect by the radially inner belt ply 8A and the radially outer belt ply 8B can be alleviated, and it is possible to suppress the generation of excessive cornering force when the centrifugal force is small such as from a straight running state to a turning state with small lean angles. Therefore, the tire 1 in the present embodiment can exhibit excellent turning performance even when the centrifugal force is small such as from a straight running state to a turning state with small lean angles.

Preferably, as shown in Fig. 2, the developed width W1 of the band ply 9A is smaller than the developed width W2 of the radially inner belt ply 8A and the developed width W3 of the radially outer belt ply 8B.

Such tread reinforcing layer 7 can moderate the hoop effect of the radially inner belt ply 8A and the radially outer belt ply 8B from a straight running state to a turning state with small lean angles, and can exert the hoop effect in a turning state with large lean angles.

Therefore, the tire 1 in the present embodiment can suppress the generation of an excessive cornering force from a straight running state to a turning state with small lean angles, and can generate a large cornering force in a turning state with large lean angles. Thus, the turning/cornering performance from a straight running state to a turning state with large lean angles can be improved.

The developed width W1 of the band ply 9A is preferably 30% to 90% of the developed tread width TWe.

Since the developed width W1 of the band ply 9A is 30% or more of the developed tread width TWe, even if the tread portion 2 is deformed during braking in a straight-running state, the band ply 9A can surely locate within the ground contact patch, and the cornering force can be reduced.

Since the developed width W1 of the band ply 9A is 90% or less of the developed tread width TWe, the hoop effect in the turning state with large lean angles can be surely exhibited, and the cornering force can be increased. Therefore, the tire 1 in the present embodiment can surely improve the turning/cornering performance from the straight running state to the turning state with large lean angles.

The developed width W2 of the radially inner belt ply 8A is preferably set in a range from 90% to 100% of the developed tread width TWe. The developed width W3 of the radially outer belt ply 8B is preferably set in a range from 85% to 95% of the developed tread width TWe. The developed width W3 of the radially outer belt ply 8B in the present embodiment is smaller than the developed width W2 of the radially inner belt ply 8A. Such belt layer 8 can further improve the rigidity of the tread portion 2.

The first angle θ1 of the belt cords 8a of the radially inner belt ply 8A with respect to the tire circumferential direction is preferably set in a range from 50 to 80 degrees. When the first angle θ1 is 50 degrees or more, it is possible to suppress an excessive hoop effect, and generate a good cornering force, and improve the turning performance.

When the first angle θ1 is 80 degrees or less, an angle difference can be surely provided between the belt cords 8a of the radially outer belt ply 8B and the belt cords 8a of the radially inner belt ply 8A, and the hoop effect can be enhanced.

The second angle θ2 of the belt cords 8a of the radially outer belt ply 8B with respect to the tire circumferential direction is preferably set in a range from 70 to 90 degrees. When the second angle θ2 is 70 degrees or more, it is possible to suppress an excessive hoop effect, and generate a good cornering force, and improve the turning performance.

When the second angle θ2 is 90 degrees or less, the direction of inclination is the same as that of the belt cords 8a of the radially inner belt ply 8A so that an arrangement error during manufacturing can be reduced.

The difference (|θ2-θ1|) between the second angle θ2 and the first angle θ1 is preferably set in a range from 10 to 40 degrees.

When the difference (|θ2-θ1|) is 10 degrees or more, the hoop effect of the radially inner belt ply 8A and the radially outer belt ply 8B can be exhibited. When the difference (|θ2-θ1|) is 40 degrees or less, it is possible to reduce the difference in the magnitude of the cornering force between the presence and absence of the band ply 9A, and improve the transient characteristics at the boundary position of the band ply 9A.

The second angle θ2 in the present embodiment is larger than the first angle θ1. In such belt layer 8, since the angle of the belt cords 8a of the radially outer belt ply 8B positioned loser to the tread surface 2s is large with respect to the tire circumferential direction, the rigidity of the tread portion 2 can be improved which helps to generate a larger cornering force.

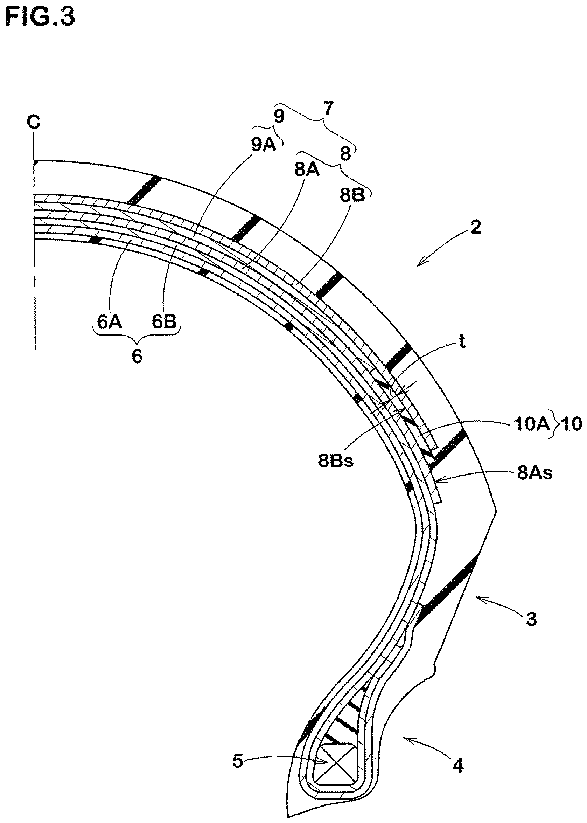

Fig. 3 is a cross-sectional view of the tread portion 2 in the present embodiment.

As shown in Figs. 1 to 3, the tread portion 2 in the present embodiment comprises a rubber layer 10 disposed on the axially outer side of the band ply 9A.

It is desirable that the rubber layer 10 is disposed on each side of the band ply 9A in the tire axial direction.

Each of the rubber layers 10 is composed of at least one, in this embodiment, only one rubber sheet 10A.

Here, the state in which the rubber layer 10 composed of the rubber sheet 10A is included, means such a state that the distance between members which are arranged so as to sandwich the rubber layer 10 is kept substantially constant.

Further, in this specification, a substantially constant distance means that the variation with respect to the average value of the distance is within +- 15%.

Such tread portion 2 is improved in torsional rigidity by the rubber sheet 10A, and can increase the cornering force during cornering with large lean angles.

Therefore, the tire 1 in the present embodiment can improve the turning performance during cornering with large lean angles. When the rubber layer 10 is composed of a plurality of rubber sheets 10A, the rubber sheets 10A may be arranged in the tire radial direction in piles, or the rubber sheets 10A may be arranged in the tire axial direction side-by-side.

The rubber layer 10 in the present embodiment is arranged between the radially inner belt ply 8A and the radially outer belt ply 8B.

The distance "t" between the radially inner belt ply 8A and the radially outer belt ply 8B measured at the position where the rubber layer 10 is arranged, is preferably 0.5 to 3.0 mm and substantially constant.

Here, the distance "t" between the radially inner belt ply 8A and the radially outer belt ply 8B is the shortest distance between the radially outer surface 8As of the radially inner belt ply 8A and the radially inner surface 8Bs of the radially outer belt ply 8B.

When the distance "t" is 0.5 mm or more, a twisting effect can be surely exhibited and the cornering force during cornering with large lean angles can be increased.

When the distance "t" is 3.0 mm or less, it is possible to suppress the cornering force from becoming excessively large and improve transient characteristics between a region with the band ply 9A and a region without the band ply 9A.

In the present embodiment, the sum (W1 + W4 x 2) of the developed width W1 of the band ply 9A and the developed width W4 of the rubber layers 10 on both sides is smaller than the developed width W2 of the radially inner belt ply 8A, but larger than the developed width W3 of the radially outer belt ply 8B. Such rubber layer 10 can further improve the torsional rigidity of the tread portion 2.

The complex elastic modulus G* of the rubber layer 10 at 70 degrees C. is preferably 500 kPa or more.

Such rubber layer 10 more reliably exert the twisting effect and increase the cornering force in a turning state with large lean angles.

Here, the complex elastic modulus G* of the rubber layer 10 at 70 degrees C. is measured according to Japanese Industrial Standard JIS-K6394 under the following conditions, for example, using a dynamic viscoelasticity measuring device (EPLEXOR series) manufactured by GABO.

Initial strain: 10%
Dynamic amplitude: +-1%
Frequency: 10 Hz
Deformation mode: Tension
Measurement temperature: 70 degrees C.

While detailed description has been made of an especially preferable embodiment of the present invention, the present invention can be embodied in various forms within the scope of the appended claims.

### Comparison tests

Based on the structure shown in Fig. 1, motorcycle tires were experimentally manufactured as test tires (working example Ex. 1 - Ex. 11 and comparative example Ref.). In the comparative example, however, the band layer was disposed on the radially outside of the belt layer.

Specifications of the test tires are shown in Table 1.

Common specifications are as follows.
tire size: front 120/70R17, rear 200/60R17
air pressure: front 250 kPa, rear 290 kPa

The test tires were mounted on the front and rear wheels of a large-size motorcycle, and tested for the moderate turning performance from the upright state to the turning state with small lean angles, the steep cornering performance during cornering with large lean angles, and the transient characteristics from the moderate turning state to the steep cornering state. These performances and transient characteristics were evaluated by the test rider.

The results are indicated in Table 1 by an index based on Comparative Example Ref. being 100, wherein the larger value is better.

**Table 1**

| Tire | Ref. | Ex.1 | Ex.2 | Ex.3 | Ex.4 | Ex.5 |
|---|---|---|---|---|---|---|
| W1/TWe (%) | 66.7 | 53.3 | 26.7 | 96.7 | 93.3 | 53.3 |
| W2/TWe (%) | 93.3 | 96.7 | 96.7 | 96.7 | 100 | 96.7 |
| W3/TWe (%) | 93.3 | 86.7 | 86.7 | 86.7 | 96.7 | 86.7 |
| angle θ1 (degrees) | 80 | 70 | 70 | 70 | 70 | 85 |
| angle θ2 (degrees) | 90 | 90 | 90 | 90 | 90 | 90 |
| distance "t" (mm) | - | - | - | - | - | - |
| G* (kPa) | - | - | - | - | - | - |
| moderate turning performance | 100 | 110 | 108 | 110 | 110 | 110 |
| steep cornering performance | 100 | 105 | 105 | 97 | 101 | 101 |
| transient characteristics | 100 | 100 | 100 | 100 | 100 | 100 |
| | | | | | | |

| Tire | Ex.6 | Ex.7 | Ex.8 | Ex.9 | Ex. 10 | Ex. 11 |
|---|---|---|---|---|---|---|
| W1/TWe (%) | 53.3 | 53.3 | 53.3 | 53.3 | 53.3 | 53.3 |
| W2/TWe (%) | 96.7 | 96.7 | 96.7 | 96.7 | 96.7 | 96.7 |
| W3/TWe (%) | 86.7 | 86.7 | 86.7 | 86.7 | 86.7 | 86.7 |
| angle θ1 (degrees) | 40 | 30 | 70 | 70 | 70 | 70 |
| angle θ2 (degrees) | 90 | 70 | 60 | 90 | 90 | 90 |
| distance "t" (mm) | - | - | - | 1 | 4 | 1 |
| G* (kPa) | - | - | - | 1000 | 1000 | 300 |
| moderate turning performance | 110 | 107 | 109 | 110 | 110 | 110 |
| steep cornering performance | 108 | 107 | 104 | 110 | 110 | 106 |
| transient characteristics | 95 | 100 | 100 | 100 | 93 | 100 |

From the test results, it was confirmed that, as compared with the comparative example, the working example tires were improved in moderate turning performance while maintaining the steep cornering performance. Thus, the tires according to the present invention can exhibit good turning performance even when the centrifugal force is small, for example, from the straight running state to the moderate turning state.

### Description of the reference signs

- 6: carcass
- 7: tread reinforcing layer
- 8: belt layer
- 8A: inner belt ply
- 8B: outer belt ply
- 8a: belt cord
- 9: band layer
- 9A: band ply

## Claims

1. A motorcycle tire (1) comprising a tread portion (2), a pair of sidewall portions (3), a pair of bead portions (4), a carcass (6) extending between the bead portions (4) through the tread portion (2) and the sidewall portions (3), and a tread reinforcing layer (7) disposed radially outside the carcass (6) in the tread portion (2),
wherein
the tread reinforcing layer (7) includes a belt layer (8) composed of a plurality of belt cords (8a), and a band layer composed of a plurality of band cords,
the belt layer (8) is composed of a radially inner belt ply (8A) disposed adjacently to the carcass (6), and a radially outer belt ply (8B) disposed radially outside the radially inner belt ply (8A),
**characterized in that**
the belt cords (8a) of the radially inner belt ply (8A) are arranged so as to intersect with the tire circumferential direction at a first angle (θ1),
the belt cords (8a) of the radially outer belt ply (8B) are arranged so as to intersect with the tire circumferential direction at a second angle (θ2) different from the first angle (θ1),
the band layer (9) is composed of at least one band ply (9A) of which band cords (9a) are arranged at an angle of 5 degrees or less with respect to the tire circumferential direction,
the band layer (9) is disposed between the radially inner belt ply (8A) and the radially outer belt ply (8B) so that the band layer (9) is adjacent to both of the radially inner belt ply (8A) and the radially outer belt ply (8B).

2. The motorcycle tire (1) according to claim 1, wherein said at least one band ply (9A) has a developed width (W1) smaller than a developed width (W2) of the radially inner belt ply (8A) and a developed width (W3) of the radially outer belt ply (8B).

3. The motorcycle tire (1) according to claim 2, wherein the developed width (W1) of said at least one band ply (9A) is in a range from 30% to 90% of a developed tread width (TWe).

4. The motorcycle tire (1) according to claim 1, wherein said at least one band ply (9A) has a developed width (W1) in a range from 30% to 90% of a developed tread width (TWe).

5. The motorcycle tire (1) according to claim 1, 2, 3 or 4, wherein the first angle (θ1) is in a range from 50 to 80 degrees.

6. The motorcycle tire (1) according to claim 1, 2, 3, 4 or 5, wherein the second angle (θ2) is in a range from 70 to 90 degrees.

7. The motorcycle tire (1) according to any one of claims 1 to 6, wherein the difference between the second angle (θ2) and the first angle (θ1) is in a range from 10 to 40 degrees.

8. The motorcycle tire (1) according to any one of claims 1 to 7, wherein the second angle (θ2) is larger than the first angle (θ1).

9. The motorcycle tire (1) according to any one of claims 1 to 8, wherein the tread portion (2) comprises a rubber layer (10) disposed axially outside said at least one band ply (9A), and the rubber layer (10) is composed of at least one rubber sheet (10A).

10. The motorcycle tire (1) according to claim 9, wherein the rubber layer (10) is disposed between the radially inner belt ply (8A) and the radially outer belt ply (8B), and a distance (t) between the radially inner belt ply (8A) and the radially outer belt ply (8B) measured at the position where the rubber layer (10) is disposed, is in a range from 0.5 to 3.0 mm and substantially constant.

11. The motorcycle tire (1) according to any one of claims 1 to 8, wherein the tread portion (2) comprises a rubber layer (10) disposed axially outside said at least one band ply (9A),
the rubber layer (10) is disposed between the radially inner belt ply (8A) and the radially outer belt ply (8B), and
a distance (t) between the radially inner belt ply (8A) and the radially outer belt ply (8B) measured at the position where the rubber layer (10) is disposed, is in a range from 0.5 to 3.0 mm and substantially constant.

12. The motorcycle tire (1) according to claim 9, 10 or 11 wherein the rubber layer (10) has a complex elastic modulus of 500 kPa or more at 70 degrees C determined under tension deformation mode at an initial strain of 10%, at a dynamic amplitude of +-1 % and at a frequency of 10 Hz.

## Patentansprüche

1. Motorradreifen (1), umfassend einen Laufflächenabschnitt (2), ein Paar Seitenwandabschnitte (3), ein Paar Wulstabschnitte (4), eine Karkasse (6), die sich zwischen den Wulstabschnitten (4) durch den Laufflächenabschnitt (2) und die Seitenwandabschnitte (3) erstreckt, und eine Laufflächenverstärkungsschicht (7), die radial außen von der Karkasse (6) in dem Laufflächenabschnitt (2) angeordnet ist,
wobei
die Laufflächenverstärkungsschicht (7)
eine Gürtelschicht (8), die aus einer Vielzahl von Gürtelkorden (8a) zusammengesetzt ist, und
eine Bandschicht umfasst, die aus einer Vielzahl von Bandkorden zusammengesetzt ist,
die Gürtelschicht (8) aus einer radial inneren Gürtellage (8A), die benachbart zu der Karkasse (6) angeordnet ist, und einer radial äußeren Gürtellage (8B), die radial außen von der radial inneren Gürtellage (8A) angeordnet ist, zusammengesetzt ist,
**dadurch gekennzeichnet, dass**
die Gürtelkorde (8a) der radial inneren Gürtellage (8A) so angeordnet sind, dass sie die Reifenumfangsrichtung unter einem ersten Winkel (θ1) schneiden,
die Gürtelkorde (8a) der radial äußeren Gürtellage (8B) so angeordnet sind, dass sie die Reifenumfangsrichtung unter einem zweiten Winkel (θ2) schneiden, der sich von dem ersten Winkel (θ1) unterscheidet,
die Bandschicht (9) aus mindestens einer Bandlage (9A) zusammengesetzt ist, deren Bandkorde (9a) unter einem Winkel von 5 Grad oder weniger in Bezug auf die Reifenumfangsrichtung angeordnet sind,
die Bandschicht (9) zwischen der radial inneren Gürtellage (8A) und der radial äußeren Gürtellage (8B) so angeordnet ist, dass die Bandschicht (9) sowohl zu der radial inneren Gürtellage (8A) als auch zu der radial äu-ßeren Gürtellage (8B) benachbart ist.

2. Motorradreifen (1) nach Anspruch 1, wobei die mindestens eine Bandlage (9A) eine Abwicklungsbreite (W1) hat, die kleiner als eine Abwicklungsbreite (W2) der radial inneren Gürtellage (8A) und eine Abwicklungsbreite (W3) der radial äußeren Gürtellage (8B) ist.

3. Motorradreifen (1) nach Anspruch 2, wobei die Abwicklungsbreite (W1) der mindestens einen Bandlage (9A) in einem Bereich von 30 % bis 90 % einer Abwicklungsbreite (TWe) liegt.

4. Motorradreifen (1) nach Anspruch 1, wobei die mindestens eine Bandlage (9A) eine Abwicklungsbreite (W1) in einem Bereich von 30 % bis 90 % einer Laufflächenabwicklungsbreite (TWe) aufweist.

5. Motorradreifen (1) nach Anspruch 1, 2, 3 oder 4, wobei der Winkel θ1 in einem Bereich von 50 bis 80 Grad liegt.

6. Motorradreifen (1) nach Anspruch 1, 2, 3, 4 oder 5, wobei der Winkel θ2 in einem Bereich von 70 bis 90 Grad liegt.

7. Motorradreifen (1) nach einem der Ansprüche 1 bis 6, wobei die Differenz zwischen dem zweiten Winkel (θ2) und dem ersten Winkel (θ1) in einem Bereich von 10 bis 40 Grad liegt.

8. Motorradreifen (1) nach einem der Ansprüche 1 bis 7, wobei der zweite Winkel (θ2) größer als der erste Winkel (θ1) ist.

9. Motorradreifen (1) nach einem der Ansprüche 1 bis 8, wobei der Laufflächenabschnitt (2) eine Gummischicht (10) umfasst, die axial außen von der mindestens einen Bandlage (9A) angeordnet ist, und die Gummischicht (10) aus mindestens einer Gummibahn (10A) zusammengesetzt ist.

10. Motorradreifen (1) nach Anspruch 9, wobei die Gummischicht (10) zwischen der radial inneren Gürtellage (8A) und der radial äußeren Gürtellage (8B) angeordnet ist, und ein Abstand (t) zwischen der radial inneren Gürtellage (8A) und der radial äußeren Gürtellage (8B), gemessen an der Position, an der die Gummischicht (10) angeordnet ist, in einem Bereich von 0,5 bis 3,0 mm liegt und im Wesentlichen konstant ist.

11. Motorradreifen (1) nach einem der Ansprüche 1 bis 8, wobei
der Laufflächenabschnitt (2) eine Gummischicht (10) umfasst, die axial außen von der mindestens einen Bandlage (9A) angeordnet ist,
die Gummischicht (10) zwischen der radial inneren Gürtellage (8A) und der radial äußeren Gürtellage (8B) angeordnet ist, und
ein Abstand (t) zwischen der radial inneren Gürtellage (8A) und der radial äußeren Gürtellage (8B), gemessen an der Stelle, an der die Gummischicht (10) angeordnet ist, in einem Bereich von 0,5 bis 3,0 mm liegt und im Wesentlichen konstant ist.

12. Motorradreifen (1) nach Anspruch 9, 10 oder 11, wobei die Gummischicht (10) einen komplexen Elastizitätsmodul von 500 kPa oder mehr bei 70 Grad C aufweist, der im Zugverformungsmodus bei einer anfänglichen Dehnung von 10 %, bei einer dynamischen Amplitude von +-1 % und bei einer Frequenz von 10 Hz bestimmt wurde.

## Revendications

1. Pneumatique pour motocyclette (1) comprenant une portion formant bande de roulement (2), une paire de portions formant parois latérales (3), une paire de portions de talon (4), une carcasse (6) s'étendant entre les portions de talon (4) à travers la portion formant bande de roulement (2) et les portions formant parois latérales (3), et une couche de renforcement de bande de roulement (7) disposée radialement à l'extérieur de la carcasse (6) dans la portion formant bande de roulement (2),
dans lequel
la couche de renforcement de bande de roulement (7) inclut une couche de ceinture (8) composée d'une pluralité de câblés de ceinture (8a), et
une couche de bande composée d'une pluralité de câblés de bande,
la couche de ceinture (8) est composée d'une nappe de ceinture radialement intérieure (8A) disposée de manière adjacente à la carcasse (6), et d'une nappe de ceinture radialement extérieure (8B) disposée radialement à l'extérieur de la nappe de ceinture radialement intérieure (8A),
**caractérisé en ce que**
les câblés de ceinture (8a) de la nappe de ceinture radialement intérieure (8A) sont agencés de manière à recouper la direction circonférentielle du pneumatique sous un premier angle (θ1),
les câblés de ceinture (8a) de la nappe de ceinture radialement extérieure (8B) sont agencés de manière à recouper la direction circonférentielle du pneumatique sous un second angle (θ2) différent du premier angle (θ1),
la couche de bande (9) est composée d'au moins une nappe de bande (9A) dont les câblés de bande (9a) sont agencés sous un angle de 5 degrés ou moins par rapport à la direction circonférentielle du pneumatique,
la couche de bande (9) est disposée entre la nappe de ceinture radialement intérieure (8A) et la nappe de ceinture radialement extérieure (8B) de telle sorte que la couche de bande (9) est adjacente à la fois à la nappe de ceinture radialement intérieure (8A) et à la nappe de ceinture radialement extérieure (8B).

2. Pneumatique pour motocyclette (1) selon la revendication 1, dans lequel ladite au moins une nappe de bande (9A) a une largeur développée (W1) plus petite qu'une largeur développée (W2) de la nappe de ceinture radialement intérieure (8A) et qu'une largeur développée (W3) de la nappe de ceinture radialement extérieure (8B).

3. Pneumatique pour motocyclette (1) selon la revendication 2, dans lequel la largeur développée (W1) de ladite au moins une nappe de bande (9A) est dans une plage allant de 30 % à 90 % d'une largeur de bande de roulement développée (TWe).

4. Pneumatique pour motocyclette (1) selon la revendication 1, dans lequel ladite au moins une nappe de bande (9A) a une largeur développée (W1) dans une plage allant de 30 % à 90 % d'une largeur de bande de roulement développée (TWe).

5. Pneumatique pour motocyclette (1) selon la revendication 1, 2, 3 ou 4, dans lequel le premier angle (θ1) est dans une plage allant de 50 à 80 degrés.

6. Pneumatique pour motocyclette (1) selon la revendication 1, 2, 3, 4 ou 5, dans lequel le second angle (θ2) est dans une plage allant de 70 à 90 degrés.

7. Pneumatique pour motocyclette (1) selon l'une quelconque des revendications 1 à 6, dans lequel la différence entre le second angle (θ2) et le premier angle (θ1) est dans une plage allant de 10 à 40 degrés.

8. Pneumatique pour motocyclette (1) selon l'une quelconque des revendications 1 à 7, dans lequel le second angle (θ2) est plus grand que le premier angle (θ1).

9. Pneumatique pour motocyclette (1) selon l'une quelconque des revendications 1 à 8, dans lequel la portion formant bande de roulement (2) comprend une couche de caoutchouc (10) disposée axialement à l'extérieur de ladite au moins une nappe de bande (9A), et la couche de caoutchouc (10) est composée d'au moins une feuille de caoutchouc (10A).

10. Pneumatique pour motocyclette (1) selon la revendication 9, dans lequel la couche de caoutchouc (10) est disposée entre la nappe de ceinture radialement intérieure (8A) et la nappe de ceinture radialement extérieure (8B), et une distance (t) entre la nappe de ceinture radialement intérieure (8A) et la nappe de ceinture radialement extérieure (8B), mesurée à la position où la couche de caoutchouc (10) est disposée, est dans une plage allant de 0,5 à 3,0 mm et sensiblement constante.

11. Pneumatique pour motocyclette (1) selon l'une quelconque des revendications 1 à 8, dans lequel la portion formant bande de roulement (2) comprend une couche de caoutchouc (10) disposée axialement à l'extérieur de ladite au moins une nappe de bande (9A),
la couche de caoutchouc (10) est disposée entre la nappe de ceinture radialement intérieure (8A) et la nappe de ceinture radialement extérieure (8B), et
une distance (t) entre la nappe de ceinture radialement intérieure (8A) et la nappe de ceinture radialement extérieure (8B), mesurée à la position où la couche de caoutchouc (10) est disposée, est dans une plage allant de 0,5 à 3,0 mm et sensiblement constante.

12. Pneumatique pour motocyclette (1) selon la revendication 9, 10 ou 11, dans lequel la couche de caoutchouc (10) a un module d'élasticité complexe de 500 kPa ou plus à 70 degrés C déterminé sous un mode de déformation en tension à une contrainte initiale de 10 %, à une amplitude dynamique de ±1 % et à une fréquence de 10 Hz.
